(19)

**Europäisches Patentamt**
**European Patent Office**
**Office européen des brevets**

(11) **EP 4 412 352 A1**

(12) **EUROPEAN PATENT APPLICATION**
published in accordance with Art. 153(4) EPC

(43) Date of publication:
**07.08.2024  Bulletin 2024/32**

(21) Application number: **22874759.8**

(22) Date of filing: **22.09.2022**

(51) International Patent Classification (IPC):
**H04W 72/04** (2023.01)

(52) Cooperative Patent Classification (CPC):
**G01S 13/86; H04W 72/04; H04W 72/0453;**
**H04W 72/566**

(86) International application number:
**PCT/CN2022/120533**

(87) International publication number:
**WO 2023/051373 (06.04.2023 Gazette 2023/14)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **28.09.2021  CN 202111144149**

(71) Applicant: **Vivo Mobile Communication Co., Ltd.**
**Dongguan, Guangdong 523863 (CN)**

(72) Inventors:
• **DING, Shengli**
 **Dongguan, Guangdong 523863 (CN)**
• **JIANG, Dajie**
 **Dongguan, Guangdong 523863 (CN)**
• **WU, Jianming**
 **Dongguan, Guangdong 523863 (CN)**

(74) Representative: **Lavoix**
**Bayerstraße 83**
**80335 München (DE)**

(54) **SIGNAL TRANSMISSION METHOD AND APPARATUS, AND DEVICE**

(57)    This application discloses a signal transmission method and apparatus, and a device, belonging to the technical field of communications. The signal transmission method in embodiments of this application includes: obtaining, by a first communication device, priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter; determining, by the first communication device, a target value of the waveform parameter according to the priority information and the waveform related configuration information; and executing, by the first communication device, at least one of the following operations according to the target value: performing transmission of a signal whose waveform parameter is the target value, and sending the target value.

FIG. 2

**Description**

**CROSS-REFERENCE TO RELATED APPLICATIONS**

This application claims the priority of Chinese Patent Application No. 202111144149.3 filed in China on September 28, 2021, the entire content of which is hereby incorporated by reference.

**TECHNICAL FIELD**

This application belongs to the technical field of communications, and particularly, relates to a signal transmission method and apparatus, and a device.

**BACKGROUND**

Wireless communication and radar detection are the two most common and important applications in the modem radio frequency (Radio Frequency, RF) technology. Communication is used for carrying out information transmission between devices, and radar is used for detecting and identifying targets. In traditional applications, the communication and the radar are independently developed and designed based on respective functions and frequency bands, without affecting each other.

With the development of the RF technology, the communication and the radar tend to be designed jointly increasingly. There are three main reasons: first, with the exponential growth of wireless devices and data traffic, spectrum resources are becoming increasingly scarce; second, radar can assist communication to obtain better performance, such as faster neighboring area development and beam forming; and third, with the increasingly complex electromagnetic environment, the performance of a single radar is becoming increasingly limited, and the requirement for multi-radar networking is becoming increasingly strong. Because the communication and the radar need to meet the requirements for spectrum efficiency, performance and multitasking, the design of the joint communication and radar (Joint Communication and Radar, JCR) has attracted widespread attention.

At present, the main way to design new waveforms for the joint communication and radar design is to use a joint waveform design of communication and radar functions. However, how to ensure that the joint waveforms can meet different requirements is an urgent problem to be solved.

**SUMMARY**

Embodiments of this application provide a signal transmission method and apparatus, and a device, which can solve the problem of designing combined waveforms for different requirements to ensure signal transmission.

According to a first aspect, a signal transmission method is provided, including:

obtaining, by a first communication device, priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;
determining, by the first communication device, a target value of the waveform parameter according to the priority information and the waveform related configuration information; and
executing, by the first communication device, at least one of the following operations according to the target value: performing transmission of a signal whose waveform parameter is the target value, and sending the target value.

According to a second aspect, a signal transmission apparatus is provided, including:

an obtaining module, configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;
a determining module, configured to determine a target value of the waveform parameter according to the priority information and the waveform related configuration information; and
a transmission module, configured to execute at least one of the following operations according to the target value: performing transmission of a signal whose waveform parameter is the target value, and sending the target value.

According to a third aspect, a communication device is provided. The communication device includes a processor, a memory, and a program or instruction stored in the memory and executable on the processor. The program or instruction, when executed by the processor, implements the steps of the method according to the first aspect.

According to a fourth aspect, a communication device is provided, including a processor and a communication interface, where the processor is configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;

the processor is further configured to determine a target value of the waveform parameter according to the priority information and the waveform related configuration information; and

the communication interface is configured to execute at least one of the following operations according to the target value:

performing transmission of a signal whose waveform parameter is the target value, and

sending the target value.

According to a fifth aspect, a readable storage medium is provided. The readable storage medium stores a program or instruction. The program or instruction, when executed by a processor, implements the steps of the method according to the first aspect.

According to a sixth aspect, a chip is provided. The chip includes a processor and a communication interface. The communication interface is coupled with the processor, and the processor is configured to execute a program or instruction to implement the method according to the first aspect.

According to a seventh aspect, a computer program product is provided. The computer program product is stored in a non-volatile storage medium. The program product is executed by at least one processor to implement the steps of the method according to the first aspect.

According to an eighth aspect, a communication device is provided. The communication device is configured to execute the method according to the first aspect.

In the embodiments of this application, the first communication device performs transmission of a signal whose waveform parameter is the target value, and/or sends the target value to a target communication device to guide the target communication device to perform transmission of a signal whose waveform parameter is the target value. The target value is determined based on the obtained priority information (for indicating the priority of a communication performance constraint condition of a signal and/or the priority of a radar performance constraint condition of the signal) and waveform related configuration information (for determining a value of a waveform parameter), so that a waveform that performs transmission of the signal can achieve the JCR, and the working requirement of the signal can be met, that is, whether the communication performance is dominated or the radar performance is dominated can be determined.

## BRIEF DESCRIPTION OF THE DRAWINGS

FIG. 1 is a block diagram of a wireless communication system;

FIG. 2 is a schematic flowchart of a signal transmission method according to an embodiment of this application;

FIG. 3 is a schematic diagram of modules of a signal transmission apparatus according to an embodiment of this application;

FIG. 4 is a schematic structural diagram of a communication device according to an embodiment of this application; and

FIG. 5 is a schematic structural diagram of a terminal according to an embodiment of this application.

## DETAILED DESCRIPTION

The technical solutions in the embodiments of this application are clearly described below with reference to the accompanying drawings in the embodiments of this application. Apparently, the described embodiments are merely some rather than all of the embodiments of this application. All other embodiments obtained by those of ordinary skill in the art based on the embodiments of this application fall within the scope of protection of this application.

In the specification and claims of this application, the terms such as "first" and "second" are used for distinguishing similar objects, rather than describing a specific sequence or order. It is to be understood that the terms used in such a way are exchangeable in a proper case, so that the embodiments of this application can be implemented in an order different from those shown or described herein. The objects distinguished by "first" and "second" are usually of the same class, and the number of the objects is not limited, for example, the number of the first object may be one or multiple. In addition, in the specification and claims, "and/or" indicates at least one of the connected objects, and the character "/" generally indicates that the associated objects are in an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in the embodiments of this application are often interchangeably used, and the described technology can be applied to the systems and radio technologies mentioned above, and can also be applied to other systems and radio technologies. The following describes a new radio (New Radio, NR) system as an example, and the NR term is used in most of the following descriptions. However, these technologies can also be applied to applications other than the NR system, e.g., the $6^{th}$ generation ($6^{th}$ Generation, 6G) communication system.

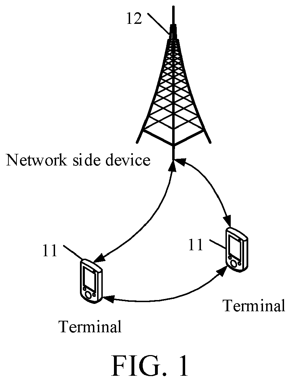

FIG. 1 is a block diagram of a wireless communication system that can be applied in an embodiment of this application. The wireless communication system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) or also known as a notebook computer, a personal digital assistant (Personal Digital Assistant, PDA), a handheld computer, a netbook, an ultra-mobile personal computer (Ultra-Mobile Personal Computer, UMPC), a mobile Internet device (Mobile Internet Device, MID), a wearable device (Wearable Device) or vehicle user equipment (Vehicle User Equipment, VUE), pedestrian user equipment (Pedestrian User Equipment, PUE), and other terminal-side devices. The wearable devices include: smart watches, wristbands, headphones, glasses, etc. It should be noted that the specific type of the terminal 11 is not limited in the embodiments of this application. The network side device 12 may be a base station or core network, and the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmitting receiving point (Transmitting Receiving Point, TRP), or some other appropriate terms in the art. As long as the same technical effect is achieved, the base station is not limited to specific technical terms. It should be noted that in the embodiments of this application, a base station in an NR system is taken only as an example, but the specific type of the base station is not limited.

It should be noted that both the terminal 11 and the network side device 12 in FIG. 1 can be implemented as JCR communication devices, which can not only perform transmission of signals between devices, but also detect and identify targets.

The signal transmission methods provided in the embodiments of this application are described in detail below through some embodiments and application scenarios thereof with reference to the accompanying drawings.

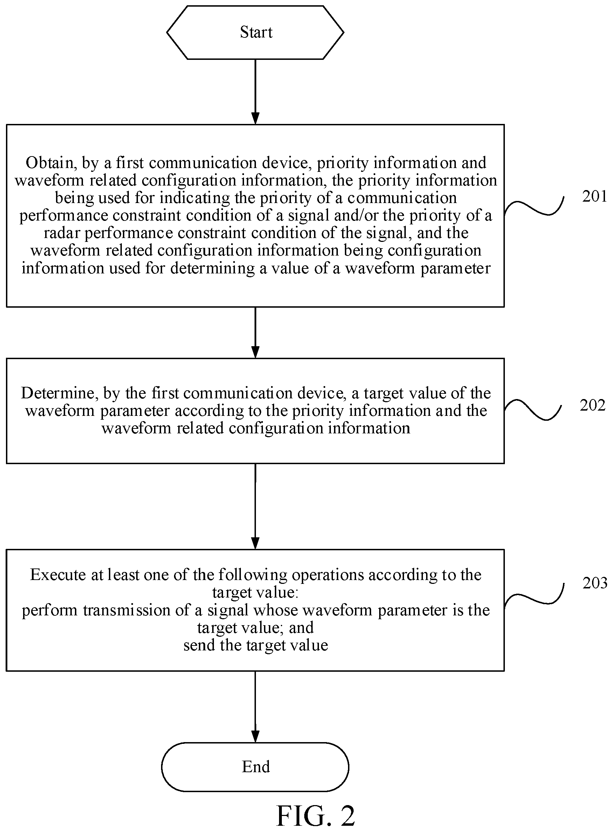

As shown in FIG. 2, a signal transmission method in an embodiment of this application includes:

Step 201: A first communication device obtains priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter.

In this step, by obtaining the priority information and the waveform related configuration information, the value of the waveform parameter can be determined cooperatively according to the priority information and the waveform related configuration information.

Step 202: The first communication device determines a target value of the waveform parameter according to the priority information and the waveform related configuration information.

In this step, the target value of the waveform parameter can be determined based on the priority information and waveform related configuration information obtained in step 201.

Step 203: The first communication device executes at least one of the following operations according to the target value:

performing transmission of a signal whose waveform parameter is the target value, and
sending the target value.

In this step, the first communication device can directly use the target value of the waveform parameter determined in step 202 to complete the transmission of a signal, and/or can send the target value to a target communication device to guide the target communication device to perform transmission of a signal whose waveform parameter is the target value.

In this way, the first communication device performs transmission of a signal whose waveform parameter is the target value, and/or sends the target value to a target communication device to guide the target communication device to perform transmission of a signal whose waveform parameter is the target value. The target value is determined based on the obtained priority information (for indicating the priority of a communication performance constraint condition of a signal and/or the priority of a radar performance constraint condition of the signal) and waveform related configuration information (for determining a value of a waveform parameter), so that a waveform that performs transmission of the signal can achieve the JCR, and the working requirement of the signal can be met, that is, whether the communication performance is dominated or the radar performance is dominated can be determined.

The first communication device may be a core network device, a base station or a terminal, and the target communication device may be a base station or a terminal. In a case that the first communication device is a core network device, the target communication device may be a base station; in a case that the first communication device is a base station, the target communication device may be a base station or a terminal; and in a case that the first communication device is a terminal, the target communication device may be a base station or a terminal.

The first communication device informs the target communication device (such as a terminal or a network device) of the target value of the waveform parameter, where in a case that the first communication device is a transmitting end of a signal, the target communication device can achieve more effective reception by obtaining the target value of the waveform parameter; and in a case that the first communication device is a receiving end of a signal, the target communication device sends a signal whose waveform parameter is the target value according to the obtained target value of the waveform parameter, so that the receiving performance of the first communication device can be ensured.

Optionally, in this embodiment, in step 201, the first communication device obtaining priority information includes:

the first communication device receives priority information from a second communication device;
or,
the first communication device obtains performance requirement information, and determines the priority information according to the performance requirement information, the performance requirement information reflecting a requirement for communication performance or radar performance of the signal.

That is to say, the priority information may be determined by the second communication device and informed to the first communication device, or may be independently determined by the first communication device. Optionally, the second communication device, the same as the first communication device, determines the priority information based on the performance requirement information capable of reflecting the requirement for the communication performance or radar performance of the signal.

It should also be noted that in this embodiment, the second communication device may be a third-party application, an application server, a core network device or a base station. The second communication device may be a target communication device.

In addition, optionally, the first communication device obtaining performance requirement information includes: the first communication device receives performance requirement information from the second communication device.

That is, the performance requirement information is sent by a third-party application, an application server, a core network device or a base station. Certainly, the performance requirement information can also indicate a target area detected by the radar or a designated target in the target area (that is, a radar detection object), and a communication object.

In addition, in this embodiment, optionally, in step 201, the first communication device obtaining waveform related configuration information includes:

the first communication device receives waveform related configuration information from the second communication device;
or,
the first communication device receives performance requirement information from the second communication device, and obtains the waveform related configuration information according to the performance requirement information and an association relationship, the association relationship being an association relationship between the performance requirement information and the waveform related configuration information.

That is to say, the waveform related configuration information may be determined by the second communication device and informed to the first communication device, or may be independently determined by the first communication device.

The association relationship may be established based on the capability information of a communication device (communication transmission capability and/or radar detection capability related information, for example, a maximum bandwidth of a transmitted signal, maximum power of the transmitted signal, and supported subcarrier spacing configuration). Optionally, the second communication device, the same as the first communication device, can also determine the waveform related configuration information based on the performance requirement information reflecting the requirement for the communication performance or radar performance of the signal and the association relationship between the performance requirement information and the waveform related configuration information.

Therefore, taking the second communication device being a core network device as an example, the manner of obtaining waveform related configuration information by the first communication device is as follows:

1) the first communication device reports its own capability information to the core network device; after receiving the capability information of the first communication device, the core network device determines waveform related configuration information according to the performance requirement information and the association relationship in combination with the capability information of the first communication device, and configures the waveform related configuration information to the first communication device;

2) after receiving the performance requirement information from the core network device, the first communication device independently determines waveform related configuration information according to the performance requirement information and the association relationship in combination with its own capability information;

3) the core network device determines first recommendation information of the waveform related configuration information based on the performance requirement information, and after the core network device informs the first communication device of the first recommendation information, the first communication device independently determines the waveform related configuration information in combination with its own capability information and the first recommendation information; and

4) after receiving the performance requirement information from the core network device, the first communication device independently determines second recommendation information of the waveform related configuration information based on the performance requirement information in combination with its own capability information, the first communication device informs the core network device of the second recommendation information, and after the core network device determines the waveform related configuration information based on the second recommendation information, the waveform related configuration information is configured to the first communication device.

Certainly, the core network device may only determine a part of the waveform related configuration information and configure this part of the waveform related configuration information to the first communication device, and the first communication device also needs to independently determine another part of the waveform related configuration information.

Optionally, in this embodiment, the waveform related configuration information includes at least one of the following information:

a maximum bandwidth;
a maximum duty cycle;
a maximum multipath time delay;
a maximum radial velocity of a communication receiver;
a maximum unambiguous range;
a maximum unambiguous velocity;
a maximum radial velocity of a radar detection object;
a minimum distinguishable range unit;
a minimum distinguishable velocity unit; and
a blind range.

Here, the maximum bandwidth $B^0$ will affect performance such as the channel capacity of communication transmission and the ranging resolution of radar detection; the maximum duty cycle $D^0$ is a ratio of a duration of a transmitted pulse to a pulse period, which will affect performance such as the channel capacity of communication transmission and the blind range of radar detection; the maximum multipath time delay $\tau_{max}$ is a maximum time delay among various paths of a communication receiver for receiving signals, which will affect the degree of inter-symbol interference; the maximum radial velocity $v_{cmax}$ of the communication receiver is a Doppler effect of a moving communication object, affecting the subcarrier spacing between the received signals in the communication receiver, which will affect the orthogonality between subcarriers; the maximum unambiguous range $R_u^0$ is a maximum target range that radar detection can accurately distinguish a target range without ambiguity; the maximum unambiguous velocity $V_u^0$ is a maximum target velocity that radar detection can accurately distinguish a target velocity without ambiguity; the maximum radial velocity $v_{rmax}$ of the radar detection object is a Doppler effect of a moving radar detection target, affecting the subcarrier spacing between radar echo signals, which will affect the orthogonality between subcarriers; the minimum distinguishable range unit $\Delta R^0$ is a minimum range between two targets that radar detection can distinguish the two targets in a radial range dimension; the minimum distinguishable velocity unit $\Delta V^0$ is a minimum velocity difference between two targets that radar detection can distinguish the two targets in a velocity dimension; and the blind range $R_{bz}^0$ is a maximum target range that a transmitting and receiving common antenna radar cannot receive a target echo due to the fact that the front edge of a target pulse echo returns to the radar before the end of the radar transmitting the back edge of a pulse because the target is closer to the radar.

After the first communication device obtains the performance requirement information, optionally, the first communication device determining the priority information according to the performance requirement information includes:

it is determined that the priority of the communication performance constraint condition is higher than the priority of the radar performance constraint condition in a case that the performance requirement information indicates that the performance requirement of the signal is that the communication performance is higher than the radar performance; or,

it is determined that the priority of the radar performance constraint condition is higher than the priority of the communication performance constraint condition in a case that the performance requirement information indicates that the performance requirement of the signal is that the radar performance is higher than the communication performance.

That is to say, in a case that the communication performance required by the signal is higher than the radar performance, that is, the JCR waveform is dominated by the maximized communication performance supplemented by the radar detection, the priority information indicating that the priority of the communication performance constraint condition of the signal is higher than the priority of the radar performance constraint condition of the signal can be determined; and in a case that the radar performance required by the signal is higher than the communication performance, that is, the JCR waveform is dominated by the maximized radar detection performance supplemented by the communication transmission, it can be determined that the priority of the radar performance constraint condition is higher than the priority of the communication performance constraint condition.

It should be understood that for the communication performance, relevant parameters include:

1) Channel capacity

For an additive white Gaussian noise (Additive White Gaussian Noise, AWGN) dominated channel, the channel capacity C is

$$C = DB \log_2 \left( 1 + \frac{\alpha P_t}{N_0 B} \right)$$

, where $\alpha$ represents a transmission loss coefficient, $P_t$ represents transmitting power, $N_0$ represents noise power spectral density of AWGN, D represents a duty cycle, and B represents a signal bandwidth.

2) Doppler tolerance

The Doppler shift between a communication receiver and a transmitter is

$$f_{dc} = \frac{v_c}{\lambda} = \frac{v_c c}{f_c}$$

, where $v_c$ represents a radial velocity of a communication receiving end relative to a transmitting end, $\lambda$ represents a wavelength, c represents a light velocity, and $f_c$ represents a carrier frequency. In order to correctly demodulate information to maintain the orthogonality between received signal subcarriers, that is, the communication maximum Doppler shift $f_{dc,max}$ is much less than a subcarrier spacing $\Delta_f$, $\Delta f \geq 10 f_{dc,max}$, where 10 is a preset subcarrier spacing setting parameter.

3) Length of guard interval

In order to eliminate the inter-symbol interference, the length of a guard interval (CP) is not less than a maximum multipath time delay of a communication channel: $T_g \geq \tau_{max}$, where $T_g$ represents an orthogonal frequency division multiplex (Orthogonal frequency division multiplex, OFDM) symbol guard interval, and $\tau_{max}$ represents a maximum

multipath time delay of a communication channel.

For radar performance, relevant parameters include:

1) Doppler tolerance

The Doppler shift $f_{dr}$ caused by a radial velocity of a target relative to radar is $f_{dr} = \dfrac{2v_r}{\lambda} = \dfrac{2v_r c}{f_c}$, where $v_r$ represents a radial velocity of a target relative to radar. In order to maintain the orthogonality between subcarriers of an OFDM waveform, the maximum Doppler shift $f_{dr,max}$ needs to be much less than a subcarrier spacing $\Delta f$, $\Delta f \geq 10 f_{dr,max}$, where 10 is a preset subcarrier spacing setting parameter.

2) Maximum unambiguous velocity (Maximum Unambiguous Velocity, MUV) and maximum unambiguous range (Maximum Unambiguous Range, MUR)

The MUV and the MUR are respectively related to a pulse repetition frequency (Pulse Repetition Frequency, PRF), where a maximum unambiguous velocity $V_u$ is: $V_u = \dfrac{cf_r}{2f_c}$; a maximum unambiguous range $R_u$ is:

$R_u = \dfrac{cT_r}{2} = \dfrac{c}{2f_r}$; and a pulse repetition period is: $T_r = 1/f_r$

3) Range resolution

A range resolution $\Delta R$ only depends on a signal bandwidth: $\Delta R = \dfrac{c}{2B} = \dfrac{c}{2N_c \Delta f}$, where $N_c$ represents a number of subcarriers.

4) Velocity resolution

A velocity resolution $\Delta V$ depends on a pulse repetition frequency $f_r$ and a number $N_r$ of pulses within a radar coherent processing interval (Coherent Processing Interval, CPI): $\Delta V = \dfrac{f_r}{N_r}$.

5) Blind range

A blind range Rbz depends on a pulse width Tp: $R_{bz} = \dfrac{cT_p}{2}$.

It can be seen that in waveform parameters that affect the signal performance, independent parameters are shown in Table 1:

Table 1

| Symbol | Meaning | Description |
|---|---|---|
| $T_g$ | OFDM symbol guard interval | Constrained by a maximum multipath time delay of a communication channel |
| $\Delta f$ | subcarrier spacing | Constrained by Doppler tolerance of a communication/radar receiver |
| $N_c$ | Number of subcarriers | Determine a communication rate and a ranging resolution |

(continued)

| Symbol | Meaning | Description |
|--------|---------|-------------|
| $N_S$ | Number of OFDM symbols within a pulse | Determine a communication rate and a radar blind range |
| $f_r$ | Pulse repetition frequency | Determine an MUR, an MUV and a velocity measurement resolution |

Other parameters, as shown in Table 2, can be derived from independent parameters or have no constraint on waveform design:

Table 2

| Symbol | Meaning | Description |
|--------|---------|-------------|
| $T_r$ | Pulse repetition interval | $T_r = 1/f_r$ |
| $T$ | Length of OFDM basic symbol | $T = 1/\Delta f$ |
| $T_s$ | Length of OFDM symbol | $T_s = T_g + 1/\Delta f$ |
| $T_P$ | Pulse width | $T_P = N_s(T_g + 1/\Delta f)$ |
| $D$ | duty cycle | $D = N_s(T_g + 1/\Delta f)f_r$ |
| $B$ | Signal bandwidth | $B = N_c\Delta f$ |
| $N_r$ | Number of pulses within a CPI | Affect radar signal processing without affecting waveform design |

In this way, in this embodiment of this application, optionally, the waveform parameter includes at least one of the following parameters:
an OFDM symbol guard interval, a subcarrier spacing, a number of subcarriers, a number of OFDM symbols within a pulse, and a pulse repetition frequency.

That is, target values determined in step 202 are values corresponding to parameters $T_g$, $\Delta f$, $N_c$, $N_s$ and $f_r$. Certainly, the values of other parameters may be further derived from the determined target values of the parameters $T_g$, $\Delta f$, $N_c$, $N_s$ and $f_r$.

On the one hand, in this embodiment, a communication-dominated JCR waveform performs transmission of a signal. Therefore, optionally, in a case that the priority information indicates that the priority of the communication performance constraint condition is higher than the priority of the radar performance constraint condition, the communication performance constraint condition includes at least one of the following conditions:

a first constraint condition;
a second constraint condition;
a third constraint condition; and
a fourth constraint condition; and
the radar performance constraint condition includes at least one of the following conditions:
a fifth constraint condition;
a sixth constraint condition;
a seventh constraint condition; and
an eighth constraint condition,
where the first constraint condition is $T_g \geq \tau_{max}$, where $T_g$ represents an OFDM symbol guard interval, and $\tau_{max}$ represents a maximum multipath time delay;
the second constraint condition is $\Delta f \geq f_{max}$, where $\Delta f$ represents a subcarrier spacing, and $f_{max}$ represents a maximum Doppler shift;
the third constraint condition is $N_c\Delta f \leq B^0$, where $N_c$ represents a number of subcarriers, and $B^0$ represents a configured maximum bandwidth;

the fourth constraint condition is $N_s f_r\left(T_g + \dfrac{1}{\Delta f}\right) \leq D^0$, where $N_s$ represents a number of OFDM symbols within a pulse, $f_r$ represents a pulse repetition frequency, and $D^0$ represents a configured maximum duty cycle;

the fifth constraint condition is $\dfrac{c}{2f_r} \geq R_u^0$ , where c represents a light velocity, and $R_u^0$ represents a configured maximum unambiguous range;

the sixth constraint condition is $\dfrac{cf_r}{2f_c} \geq V_u^0$ , where $f_c$ represents a carrier frequency, and $V_u^0$ represents a configured maximum unambiguous velocity;

the seventh constraint condition is $\dfrac{c}{2N_c \Delta f} \leq \Delta R^0$ , where $\Delta R^0$ represents a configured minimum distinguishable range unit; and

the eighth constraint condition is $\dfrac{cN_s}{2}\left(T_g + \dfrac{1}{\Delta f}\right) \leq R_{bz}^0$ , where $R_{bz}^0$ represents a configured blind range.

That is to say, for the communication-dominated JCR waveform, the communication performance constraint condition of the waveform parameter thereof includes one or more of the first constraint condition, the second constraint condition, the third constraint condition and the fourth constraint condition; and the radar performance constraint condition includes one or more of the fifth constraint condition, the sixth constraint condition, the seventh constraint condition and the eighth constraint condition.

Moreover, because the communication is dominated at present, f max in the second constraint condition takes a specific multiple of communication maximum Doppler shift $f_{dc,max}$, that is, $\Delta f \geq \omega f_{dc,max}$, indicating that $\Delta f$ is much greater than $f_{dc,max}$, where $\omega$ represents an adjustable subcarrier spacing setting parameter, for example, $\omega$ is equal to 10.

In a case that the above communication performance constraint condition includes the first constraint condition, the second constraint condition, the third constraint condition and the fourth constraint condition, and the radar performance constraint condition includes the fifth constraint condition, the sixth constraint condition, the seventh constraint condition and the eighth constraint condition, optionally the priority information indicates that the priorities of the constraint conditions are sequentially sorted from high to low as follows: the third constraint condition, the fourth constraint condition, the first constraint condition, the second constraint condition, the eighth constraint condition, the fifth constraint condition, the sixth constraint condition, and the seventh constraint condition.

At this time, the priority information indicates the priorities of the communication-dominated constraint conditions, as shown in Table 3:

Table 3

| Priority | Constraint | Description |
|---|---|---|
| 1 | Third constraint condition | Maximize channel capacity |
| 2 | Fourth constraint condition | |
| 3 | First constraint condition | Reduce inter-symbol interference |
| 4 | Second constraint condition | Maintain orthogonality between subcarriers |
| 5 | Eighth constraint condition | Minimize a first blind area of radar ranging |
| 6 | Fifth constraint condition | Meet MUR requirements |
| 7 | Sixth constraint condition | Meet MUV requirements |
| 8 | Seventh constraint condition | Maximally meet the fourth constraint condition |

where the smaller the value of the priority, the higher the priority. For example, the third constraint condition whose value of the priority is 1 is a constraint condition with the highest priority, and the seventh constraint condition whose value of the priority is 8 is a constraint condition with the lowest priority.

Optionally, in this embodiment, step 202 includes:

the first communication device determines a candidate value of the waveform parameter according to the waveform related configuration information and the priority information indicating that the priority of the communication performance constraint condition is higher than the priority of the radar performance constraint condition, where the candidate value meets the communication performance constraint condition;

the first communication device determines the candidate value as the target value of the waveform parameter in a case that the candidate value completely or maximally meets the radar performance constraint condition; or,

the first communication device updates the candidate value in a case that the radar performance constraint condition includes the fifth constraint condition and the sixth constraint condition and the candidate value does not meet the fifth constraint condition or the sixth constraint condition, until the candidate value meets the fifth constraint condition and the sixth constraint condition, and determines the candidate value meeting the fifth constraint condition and the sixth constraint condition as the target value of the waveform parameter.

In this way, the first communication device will first determine a candidate value of the waveform parameter that can meet the communication performance constraint condition according to the obtained waveform related configuration information and priority information indicating that the priority of the communication performance constraint condition is higher than the priority of the radar performance constraint condition. Then, in a case that the candidate value can completely or maximally meet the radar performance constraint condition, the candidate value is the target value. Here, based on the limitation of the communication performance constraint condition, there is a case that the candidate value cannot meet the radar performance constraint condition. However, because the current signal is required to be dominated by communication and supplemented by radar, when the candidate value maximally meets the radar performance constraint condition, the candidate value may also be determined as the target value. Maximally meeting may also be understood as minimally deviating, that is, the candidate value has the minimum absolute difference from the reference value limited by the radar performance constraint condition compared to other values.

Or, for the candidate value meeting the communication performance constraint condition, the first communication device updates the candidate value in a case that the radar performance constraint condition includes the fifth constraint condition and the sixth constraint condition and the candidate value does not meet the fifth constraint condition or the sixth constraint condition, until the candidate value meets the fifth constraint condition and the sixth constraint condition, and determines the candidate value meeting the fifth constraint condition and the sixth constraint condition as the target value of the waveform parameter.

On the other hand, in this embodiment, a radar-dominated JCR waveform performs transmission of a signal. Therefore, optionally, in a case that the radar performance is higher than the communication performance, the communication performance constraint condition includes at least one of the following conditions:

a first constraint condition; and
a fourth constraint condition; and
the radar performance constraint condition includes at least one of the following conditions:

a second constraint condition;
a third constraint condition;
a seventh constraint condition; and
an eighth constraint condition,

where the first constraint condition is $T_g \geq \tau_{max}$, where $T_g$ represents an OFDM symbol guard interval, and $\tau_{max}$ represents a maximum multipath time delay;

the second constraint condition is $\Delta f \geq f_{max}$, where $\Delta f$ represents a subcarrier spacing, and $f_{max}$ represents a maximum Doppler shift;

the third constraint condition is $N_c \Delta f \leq B^0$, where $N_c$ represents a number of subcarriers, and $B^0$ represents a configured maximum bandwidth;

$$N_s f_r \left( T_g + \frac{1}{\Delta f} \right) \leq D^0$$

the fourth constraint condition is , where $N_s$ represents a number of OFDM symbols within a pulse, $f_r$ represents a pulse repetition frequency, and $D^0$ represents a configured maximum duty cycle;

$$\frac{c}{2 N_c \Delta f} \leq \Delta R^0$$

the seventh constraint condition is , where $\Delta R^0$ represents a configured minimum distinguishable range unit; and

$$\frac{c N_s}{2} \left( T_g + \frac{1}{\Delta f} \right) \leq R_{bz}^0$$

the eighth constraint condition is , where $R_{bz}^0$ represents a configured blind range.

That is to say, for the communication-dominated JCR waveform, the communication performance constraint condition of the waveform parameter thereof includes one or more of the first constraint condition and the fourth constraint condition; and the radar performance constraint condition includes one or more of the second constraint condition, the third constraint condition, the seventh constraint condition and the eighth constraint condition.

Moreover, because the radar is dominated at present, $f_{max}$ in the second constraint condition takes a specific multiple of radar maximum Doppler shift $f_{dr,max}$, that is, $\Delta f \geq \omega f_{dr,max}$, indicating that $\Delta f$ is much greater than $f_{dr,max}$, where $\omega$ represents an adjustable subcarrier spacing setting parameter, for example, $\omega$ is equal to 10.

In a case that the above communication performance constraint condition includes the first constraint condition and the fourth constraint condition, and the radar performance constraint condition includes the second constraint condition, the third constraint condition, the seventh constraint condition and the eighth constraint condition, optionally, the priority information indicates that the priorities of the constraint conditions are sequentially sorted from high to low as follows: the eighth constraint condition, the second constraint condition, the seventh constraint condition, the third constraint condition, the fourth constraint condition, and the first constraint condition.

At this time, the priority information indicates the priorities of the radar-dominated constraint conditions, as shown in Table 4:

Table 4

| Priority | Constraint | Description |
|---|---|---|
| 1 | Eighth constraint condition | Minimize a first blind area of radar ranging |
| 2 | Second constraint condition | Maintain orthogonality between subcarriers |
| 3 | Seventh constraint condition | Minimize a resolution of radar ranging |
| 4 | Third constraint condition | |
| 5 | Fourth constraint condition | Maximize communication channel capacity |
| 6 | First constraint condition | Reduce inter-symbol interference |

Here, the same as Table 3, the smaller the value of the priority, the higher the priority. For example, the eighth constraint condition whose value of the priority is 1 is a constraint condition with the highest priority, and the first constraint condition whose value of the priority is 6 is a constraint condition with the lowest priority.

Optionally, in this embodiment, step 202 includes:

the first communication device determines a candidate value of the waveform parameter according to the waveform related configuration information and the priority information indicating that the priority of the radar performance constraint condition is higher than the priority of the communication performance constraint condition, where the candidate value meets the communication performance constraint condition and the radar performance constraint condition;

the first communication device judges whether the candidate value meets a fifth constraint condition and a sixth constraint condition;

the first communication device uses the candidate value as the target value in a case that the candidate value meets the fifth constraint condition and the sixth constraint condition; or,

the first communication device updates the candidate value in a case that the candidate value does not meet the fifth constraint condition or the sixth constraint condition, until the candidate value meets the fifth constraint condition and the sixth constraint condition, and determines the candidate value meeting the fifth constraint condition and the sixth constraint condition as the target value of the waveform parameter,

$$\frac{c}{2f_r} \geq R_u^0$$

where the fifth constraint condition is ⠀⠀⠀⠀, where c represents a light velocity, and $R_u^0$ represents a configured maximum unambiguous range; and

$$\frac{cf_r}{2f_c} \geq V_u^0$$

the sixth constraint condition is ⠀⠀⠀⠀, where $f_c$ represents a carrier frequency, and $V_u^0$ represents a configured maximum unambiguous velocity.

Different from the determination of the candidate value when the communication is dominated, Here, the first communication device will firstly determine a candidate value of the waveform parameter that can meet the communication performance constraint condition and the communication performance constraint condition according to the obtained waveform related configuration information and priority information indicating that the priority of the radar performance constraint condition is higher than the priority of the communication performance constraint condition. Then, based on the fifth constraint condition and the sixth constraint condition, whether the determined candidate value can meet the fifth constraint condition and the sixth constraint condition is judged, where in a case that the determined candidate value can completely meet the fifth constraint condition and the sixth constraint condition, the candidate value is the target value; and in a case that the determined candidate value does not meet one or both of the fifth constraint condition and the sixth constraint condition, the candidate value needs to be updated until the candidate value can completely meet the fifth constraint condition and the sixth constraint condition, and the candidate value is used as the target value.

It should be noted that in this embodiment, whether the priority of the communication performance constraint condition is higher than the priority of the radar performance constraint condition, or the priority of the radar performance constraint condition is higher than the priority of the communication performance constraint condition, the candidate value can be updated in the same manner, for example, the candidate value can be updated by staggered pulse repetition frequencies. Therefore, optionally, the first communication device updating the candidate value includes:

> the first communication device adjusts a subcarrier spacing setting parameter at least once to obtain at least two subcarrier spacings in total with the candidate value;
> the first communication device determines at least two pulse repetition frequencies corresponding to the at least two subcarrier spacings;
> the first communication device determines a maximum unambiguous range and a maximum unambiguous velocity of a staggered pulse repetition frequency according to the at least two pulse repetition frequencies;
>
> the first communication device updates the candidate value based on the at least two subcarrier spacings in response to that the maximum unambiguous range of the staggered pulse repetition frequency is greater than or equal to $R_u^0$ and the maximum unambiguous velocity of the staggered pulse repetition frequency is greater than or equal to $V_u^0$; or, the first communication device readjusts the subcarrier spacing setting parameter in response to that the maximum unambiguous range of the staggered pulse repetition frequency is less than $R_u^0$ or the maximum unambiguous velocity of the staggered pulse repetition frequency is less than $V_u^0$, until the maximum unambiguous range of the staggered pulse repetition frequency is greater than or equal to $R_u^0$ and the maximum unambiguous velocity of the staggered pulse repetition frequency is greater than or equal to $V_u^0$.

Here, the subcarrier spacing setting parameter is a parameter for determining a subcarrier spacing $\Delta f$. After the subcarrier spacing setting parameter is adjusted, the candidate value of $\Delta f$ will change. In this way, the first communication device adjusts the subcarrier spacing setting parameter at least once, at least two subcarrier spacings can be obtained based on the subcarrier spacing setting parameters before and after adjusting, and correspondingly, at least two corresponding pulse repetition frequencies can be determined. Then, the maximum unambiguous range and the maximum unambiguous velocity of the staggered pulse repetition frequency are determined according to the at least two pulse repetition frequencies, thus completing the update of the candidate value. That is, when the determined maximum unambiguous range of the staggered pulse repetition frequency is greater than or equal to $R_u^0$ and the determined maximum unambiguous velocity of the staggered pulse repetition frequency is greater than or equal to $V_u^0$, the candidate value can be updated based on the at least two pulse repetition frequencies; and when the determined maximum unambiguous range of the staggered pulse repetition frequency is less than $R_u^0$ or the determined maximum unambiguous velocity of the staggered pulse repetition frequency is less than $V_u^0$, it can be known that this adjustment is not successful, and the subcarrier spacing setting parameter also needs to be readjusted, until the corresponding maximum unambiguous range of the staggered pulse repetition frequency after adjusting is greater than or equal to $R_u^0$ and the corresponding maximum unambiguous velocity of the staggered pulse repetition frequency after adjusting is greater than or equal to $V_u^0$ .

The specific implementation of determining the maximum unambiguous range and the maximum unambiguous velocity of the staggered pulse repetition frequency according to the at least two pulse repetition frequencies is described through two pulse repetition frequencies as follows:

Assuming that $\Delta f_1$ and $\Delta f_2$ are obtained respectively after the subcarrier spacing setting parameter is adjusted twice, corresponding $f_{r1}$ is obtained according to $\Delta f_1$, corresponding $f_{r2}$ is obtained according to $\Delta f_2$, and $m$, $n$ and $\Delta f_r$ are obtained according to $f_{r1}=m\Delta f_r$ and $f_{r2}=n\Delta f_r$, where $m$ and $n$ are relatively prime, $\Delta f_r$ is a greatest common divisor of $f_{r1}$ and $f_{r2}$, and then, the MUV of the staggered pulse repetition frequency is expanded to the value corresponding to the PRF being $f_{r1}'=mn\Delta f_r$, denoted as MUV'. Similarly, corresponding $T_{r1}$ is obtained according to $\Delta f_1$, corresponding $T_{r2}$ is obtained according to $\Delta f_2$, and $p$, $q$ and $\Delta T_r$ are determined according to $T_{r1}=p\Delta T_r$ and $f_{r2}=q\Delta T_r$, where $p$ and $q$ are relatively prime, $\Delta T_r$ is a greatest common divisor of $T_{r1}$ and $T_{r2}$, and then, the MUR of the staggered pulse repetition frequency is expanded to the value corresponding to the pulse repetition interval (Pulse Repetition Interval, PRI) being $T_{r1}'=p\,q\Delta T_r$, denoted as MUR'.

Certainly, only the implementation of staggered double frequencies is described here, but staggered triple frequencies are also applicable to the embodiments of this application, which will not be described here.

In addition, the process of updating the candidate value can also be carried out by a genetic algorithm, which will not be described here.

The applications of the embodiments of this application are described below with reference to specific scenarios:

Scenario 1: User equipment 1 (first communication device) receives performance requirement information from the corresponding base station (second communication device). The performance requirement information indicates that the performance requirement of a signal is that the communication performance is higher than the radar performance, that is, the maximized communication performance is dominated supplemented by the radar detection. The user equipment 1 also receives waveform related configuration information configured through RRC from the corresponding base station. The user equipment 1 can determine that the priority of the communication performance constraint condition is higher than the priority of the radar performance constraint condition according to the received performance requirement information (where the communication performance constraint condition includes the first constraint condition, the second constraint condition, the third constraint condition and the fourth constraint condition, and the radar performance constraint condition includes the fifth constraint condition, the sixth constraint condition, the seventh constraint condition and the eighth constraint condition), and can determine that the priorities of the constraint conditions are sequentially sorted from high to low as follows: the third constraint condition, the fourth constraint condition, the first constraint condition, the second constraint condition, the eighth constraint condition, the fifth constraint condition, the sixth constraint condition, and the seventh constraint condition. Thus, first, in order to achieve maximization of the communication channel capacity, according to the third constraint condition, the signal bandwidth is set to a maximum value $B^0$ within a system allowable range, and there is Formula $N_c\Delta f = B^0$ (1). According to the fourth constraint condition, the duty cycle is set to a maximum value $D^0$ within a system allowable range, and there is Formula $N_s f_r(T_g + 1/\Delta f)=D^0$ (2). At this time, the seventh constraint condition is met following the fourth constraint condition.

Then, in order to balance the radar performance, according to the first constraint condition, $T_g$ is minimized, and $T_g=\tau_{max}$ is taken. Similarly, in order to balance the radar performance, according to the second constraint condition, $\Delta f = 10f_{dc,max}$ is taken, where 10 is a subcarrier spacing setting parameter and is a preset adjustable parameter, and correspondingly, a length $T = 1/10f_{dc,max}$ of an OFDM basic symbol can be obtained. Therefore, $N_c = \left\lfloor B^0 / 10 f_{dc,max} \right\rfloor$ can be obtained through Formula (1). Correspondingly, a length $T_s = T_g +1/\Delta f= \tau_{max} +1/ 10f_{dc,max}$ of an OFDM symbol can be obtained.

Then, according to the eighth constraint condition, the sizes of $T_s$, $0.5\times2R_{bz}^0/c$ and $2R_{bz}^0/c$ are compared according to the known $T_s = \tau_{max} +1/ 10f_{dc,max}$ :

1) If $T_s\geq2R_{bz}^0/c$, the eighth constraint condition cannot be met. In order to minimize deviation from the eighth constraint condition, a minimum value of $N_s$ is taken, $N_s =1$, there is no need for a guard interval between OFDM symbols, and $T_g =0$. Correspondingly, pulse widths $T_P$ and $T_S$ are both equal to $1/10f_{dc,max}$. Further, $f_r=D^0/T_P$ can be obtained through Formula (2). Thus, candidate values of waveform parameters $T_g$, $\Delta f$, $N_c$, $N_s$ and $f_r$ are obtained. At this time, in a case that the candidate value meets the fifth constraint condition and the sixth constraint condition, the candidate value is the target value; and in a case that the candidate value does not meet at least one of the fifth constraint condition and the sixth constraint condition, the candidate value is updated (the specific updating manner is described above and will not be described here).

2) If $0.5 \times 2R_{bz}^0/c < T_s < 2R_{bz}^0/c$, the eighth constraint condition is met. At this time, $N_s$ =1, there is no need for a guard interval between OFDM symbols, and $T_g$ =0. Correspondingly, $T_P$ and $T_S$ are both equal to $1/10f_{dc,max}$. Further, $f_r = D^0/T_p$ can be obtained through Formula (2). Thus, candidate values of waveform parameters $T_g$, $\Delta f$, $N_c$, $N_s$ and $f_r$ are obtained. At this time, in a case that the candidate value meets the fifth constraint condition and the sixth constraint condition, the candidate value is the target value; and in a case that the candidate value does not meet at least one of the fifth constraint condition and the sixth constraint condition, the candidate value is updated (the specific updating manner is described above and will not be described here).

3) If $Ts \leq 0.5 \times 2R_{bz}^0/c$, the eighth constraint condition is met. At this time, $N_s = \left\lfloor 2R_{bz}^0 \big/ cT_s \right\rfloor$ , and $T_P = N_s T_s$. Further, $f_r = D^0/T_p$ can be obtained through Formula (2). Thus, candidate values of waveform parameters $T_g$, $\Delta f$, $N_c$, $N_s$ and $f_r$ are obtained. At this time, in a case that the candidate value meets the fifth constraint condition and the sixth constraint condition, the candidate value is the target value; and in a case that the candidate value does not meet at least one of the fifth constraint condition and the sixth constraint condition, the candidate value is updated (the specific updating manner is described above and will not be described here).

Specifically, the content of the waveform related configuration information is shown in Table 5:

Table 5

| Symbol | $B^0$ | $D^0$ | $R_u^0$ | $V_u^0/v_{rmax}/V_{cmax}$ | $\Delta R^0$ | $R_{bz}^0$ | $\tau_{max}$ | $f_c$ |
|---|---|---|---|---|---|---|---|---|
| Value | 400 MHz | 0.2 | 5 km | 140 m/s | 1 m | 100 m | 0.1 $\mu$s | 3 GHz |

Based on the waveform related configuration information, according to the above content, first, $N_c\Delta f = 4 \times 10^8$ is obtained according to the third constraint condition, and $N_s f_r(T_g + 1/\Delta f) = 0.2$ is obtained according to the fourth constraint condition. $T_g = \tau_{max} = 0.1$ $\mu$s is obtained according to the first constraint condition,

$$\Delta f = 10 f_{dc,max} = 10 \times \frac{v_{cmax} c}{f_c} = 140 \text{kHz}$$

is obtained according to the second constraint condition, and

$$N_c = \left\lfloor B^0 \big/ \Delta f \right\rfloor = 2857$$ Correspondingly, $T = 1/\Delta f = 7.143$ $\mu$s, and $T_s = \tau_{max} + 1/\Delta f = 7.243$ $\mu$s. Therefore, $T_s > 2R_{bz}^0/c$, and the eighth constraint condition cannot be met. Therefore, in order to minimize deviation from the eighth constraint condition, $N_s$ =1, $T_g$ =0, and $T_p = T_s = 7.143$ $\mu$s. At this time, $R_{bz} = T_p c/2 \approx 1.072$ km. Further, $f_r = D^0/T_p = 28$ kHz. At this time, MUR=5.36 km, and MUV=14 kHz. Obviously, both the fifth constraint condition and the sixth constraint condition can be met. Therefore, target values of waveform parameters are shown in Table 6:

Table 6

| Parameter | $T_g$ | $\Delta f$ | $N_c$ | $N_s$ | $f_r$ |
|---|---|---|---|---|---|
| Value | 0 | 140 kHz | 2857 | 1 | 28 kHz |

Scenario 2: User equipment 2 (first communication device) receives performance requirement information from the corresponding base station (second communication device). The performance requirement information indicates that the performance requirement of a signal is that the radar performance is higher than the communication performance, that is, the maximized radar detection performance is dominated supplemented by the communication transmission. The user equipment 2 also receives waveform related configuration information configured through radio resource control (Radio Resource Control, RRC) from the corresponding base station. The user equipment 2 can determine that the priority of the radar performance constraint condition is higher than the priority of the communication performance constraint condition according to the received performance requirement information (where the communication performance constraint condition includes the first constraint condition and the fourth constraint condition, and the radar performance constraint condition includes the second constraint condition, the third constraint condition, the seventh constraint condition and the eighth constraint condition), and can determine that the priorities of the constraint conditions are sequentially sorted from high to low as follows: the eighth constraint condition, the second constraint condition, the seventh constraint condition, the third constraint condition, the fourth constraint condition, and the first constraint condition. Thus,

first, considering that a target range is relatively close in a cellular communication scenario, the first priority of radar detection is a blind range. At the same time, considering that the value of the blind range may cause larger presetting on other parameters, therefore, according to the eighth constraint condition, there is Formula

$$T_p = N_s \left( T_g + 1/\Delta f \right) \le \frac{2R_{bz}^0}{c}.$$

Then, in order to maintain the orthogonality between subcarriers and ensure that a target echo signal can be correctly demodulated, in a case that the eighth constraint condition is met, according to the second constraint condition,

$$\Delta f \ge \frac{c}{2R_{bz}^0}$$ , therefore, $$\Delta f = \max \left\{ \frac{c}{2R_{bz}^0}, 10 f_{dr,\max} \right\}$$ . Next step, in order to increase the ranging resolution, since the signal bandwidth is limited by system resource allocation, according to the seventh constraint condition and the third constraint condition, $N_c \Delta f = B^0$, and at this time, $$N_c = \left\lfloor \frac{B^0}{\Delta f} \right\rfloor$$ . Next step, in order to maximize the communication channel capacity, the duty cycle needs to be maximized under the constraints of radar performance parameters. According to

$$D = N_s f_r \left( T_g + \frac{1}{\Delta f} \right) = D^0$$

the fourth constraint condition, the maximum value of the duty cycle is: .

Then, in order to reduce the inter-symbol interference, the OFDM symbol guard interval needs to meet the first constraint condition. The sizes of $T_s$, $0.5 \times 2R_{bz}^0/c$ and $2R_{bz}^0/c$ are compared:

1) If the length of an OFDM basic symbol is $T \ge 2R_{bz}^0/c$, the first constraint condition is met, and the value of $T_g$ cannot meet the requirement for the maximum multipath time delay, so inter-symbol interference inevitably exists in communications. At this time, $N_s = 1$, there is no need for a guard interval between OFDM symbols, and $T_g = 0$. Correspondingly, the value of the PRF is: $f_r = \Delta f \times D^0$.

2) If $0.5 \times 2R_{bz}^0/c < T < 2R_{bz}^0/c$, the first constraint condition is met, $N_s = 1$, there is no need for a guard interval between OFDM symbols, and $T_g = 0$. Correspondingly, the value of the PRF is: $f_r = \Delta f \times D^0$.

3) If $T \le 0.5 \times 2R_{bz}^0/c$, the first constraint condition is met. At this time, $T_g = \tau_{\max}$, and

$$N_s = \left\lfloor 2R_{bz}^0 / cT_s \right\rfloor = \left\lfloor \frac{2R_{bz}^0}{c \left( \tau_{\max} + 1/\Delta f \right)} \right\rfloor$$ . Correspondingly, the value of the PRF is:

$$f_r = \frac{D^0}{\left( \tau_{\max} + 1/\Delta f \right) N_s}.$$

Finally, whether the obtained $f_r$ meets the fifth constraint condition and the sixth constraint condition is judged. At this time, in a case that the fifth constraint condition and the sixth constraint condition are met, the candidate value of each waveform parameter is the target value; and in a case that at least one of the fifth constraint condition and the sixth constraint condition is not met, the candidate value is updated (the specific updating manner is described above and will not be described here).

Specifically, the content of the waveform related configuration information is also shown in Table 5. Based on the waveform related configuration information, according to the above content, first, $T_p = N_s(T_g + 1/\Delta f) \le 0.667\mu s$ is

$$\Delta f = \max \left\{ \frac{c}{2R_{bz}^0}, 10 f_{dr,\max} \right\} = 1.5 \text{MHz}$$

obtained according to the eighth constraint condition;                                                                                      is obtained accord-

$$N_c = \left\lfloor \frac{B^0}{\Delta f} \right\rfloor = 266$$

ing to the second constraint condition; $\qquad$ is obtained according to the third constraint condition; and $D=D^0=0.2$ is obtained according to the fourth constraint condition. According to the value of $\Delta f$, $T=1/\Delta f=0.667 \ \mu s$. Therefore, $T=2R_{bz}^0/c$. At this time, $N_s=1$, there is no need for a guard interval between OFDM symbols, and $T_g=0$. Correspondingly, the value of the PRF is: $f_r = \Delta f \times D^0 = 300 kHz$. At this time, because MUR=0.5 km and MUV=150 kHz, the sixth constraint condition is met, but the second constraint condition is not met, and then, the candidate value is updated.

Here, staggered triple frequencies are used, and the value of the adjusted $\Delta f$ is returned based on the obtained $\Delta f$=1.5 MHz to obtain a second repetition frequency: $\Delta f$=2 MHz, correspondingly, $N_c'$=200, $D'$=0.2, $T=1/\Delta f=0.5 \ \mu s$, $N_s$=1, $T_g$=0 and $f_r'$=400 kHz are obtained, and at this time, MUR'=0.4 km; and a third repetition frequency: $\Delta f$=2.5 MHz, correspondingly, $N_c'$=160, $D'$=0.2, $T=1/\Delta f=0.4 \ \mu s$, $N_s$=1, $T_g$=0 and $f_r'$=500 kHz are obtained, and at this time, MUR"=0.3 km. After triple frequency staggering, $MUR_3$=6 km, the fifth constraint condition is met, and target values of waveform parameters are determined. Therefore, target values of waveform parameters are shown in Table 7:

Table 7

| Parameter | $T_g$ | $\Delta f$ | $N_c$ | $N_s$ | $f_r$ |
|---|---|---|---|---|---|
| First repetition frequency | 0 | 1.5 MHz | 266 | 1 | 300 kHz |
| Second repetition frequency | 0 | 2 MHz | 200 | 1 | 400 kHz |
| Third repetition frequency | 0 | 2.5 MHz | 160 | 1 | 500 kHz |

In conclusion, the method in the embodiments of this application can determine applicable target values of waveform parameters based on the priority requirements for communication performance and radar performance for signals transmitted through JCR waveforms, so as to complete the transmission of signals, thus balancing the dominant and auxiliary functions of signals.

It should be noted that an executive body of the signal transmission method provided in the embodiments of this application may be a signal transmission apparatus, or a control module for executing and loading the signal transmission method in the signal transmission apparatus. In the embodiments of this application, the signal transmission apparatus executing and loading the signal transmission method is taken as an example to describe the signal transmission method provided in the embodiments of this application.

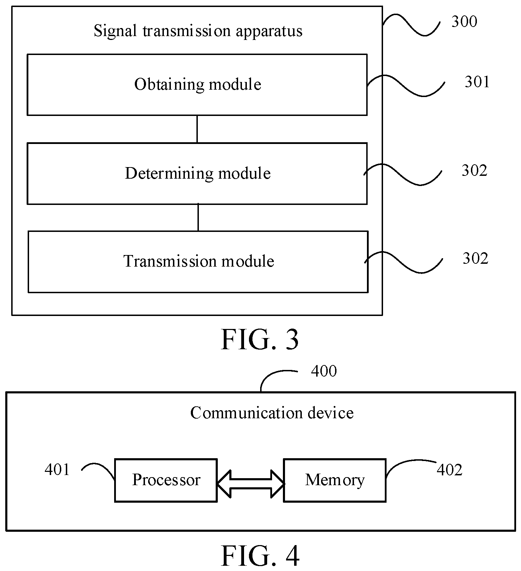

As shown in FIG. 3, a signal transmission apparatus 300 in an embodiment of this application includes:

an obtaining module 310, configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;
a determining module 320, configured to determine a target value of the waveform parameter according to the priority information and the waveform related configuration information; and
a transmission module 330, configured to execute at least one of the following operations according to the target value: performing transmission of a signal whose waveform parameter is the target value, and sending the target value.

Optionally, the obtaining module is further configured to:

receive priority information from a second communication device;
or,
obtain performance requirement information, and determine the priority information according to the performance requirement information, the performance requirement information reflecting the requirement for the communication performance or radar performance of the signal.

Optionally, the obtaining module is further configured to:
receive performance requirement information from the second communication device.
Optionally, the obtaining module is further configured to:

determine that the priority of the communication performance constraint condition is higher than the priority of the radar performance constraint condition in a case that the performance requirement information indicates that the performance requirement of the signal is that the communication performance is higher than the radar performance; or,

determine that the priority of the radar performance constraint condition is higher than the priority of the communication performance constraint condition in a case that the performance requirement information indicates that the performance requirement of the signal is that the radar performance is higher than the communication performance.

Optionally, in a case that the priority information indicates that the priority of the communication performance constraint condition is higher than the priority of the radar performance constraint condition, the communication performance constraint condition includes at least one of the following conditions:

a first constraint condition;
a second constraint condition;
a third constraint condition; and
a fourth constraint condition; and
the radar performance constraint condition includes at least one of the following conditions:

a fifth constraint condition;
a sixth constraint condition;
a seventh constraint condition; and
an eighth constraint condition,
where the first constraint condition is $T_g \geq \tau_{max}$, where $T_g$ represents an OFDM symbol guard interval, and $\tau_{max}$ represents a maximum multipath time delay;
the second constraint condition is $\Delta f \geq f_{max}$, where $\Delta f$ represents a subcarrier spacing, and $f_{max}$ represents a maximum Doppler shift;
the third constraint condition is $N_c \Delta f \leq B^0$, where $N_c$ represents a number of subcarriers, and $B^0$ represents a configured maximum bandwidth;

the fourth constraint condition is $N_s f_r \left( T_g + \dfrac{1}{\Delta f} \right) \leq D^0$, where $N_s$ represents a number of OFDM symbols within a pulse, $f_r$ represents a pulse repetition frequency, and $D^0$ represents a configured maximum duty cycle;

the fifth constraint condition is $\dfrac{c}{2f_r} \geq R_u^0$, where c represents a light velocity, and $R_u^0$ represents a configured maximum unambiguous range;

the sixth constraint condition is $\dfrac{c f_r}{2 f_c} \geq V_u^0$, where $f_c$ represents a carrier frequency, and $V_u^0$ represents a configured maximum unambiguous velocity;

the seventh constraint condition is $\dfrac{c}{2 N_c \Delta f} \leq \Delta R^0$, where $\Delta R^0$ represents a configured minimum distinguishable range unit; and

the eighth constraint condition is $\dfrac{c N_s}{2} \left( T_g + \dfrac{1}{\Delta f} \right) \leq R_{bz}^0$, where $R_{bz}^0$ represents a configured blind range.

Optionally, the priority information indicates that the priorities of the constraint conditions are sequentially sorted from high to low as follows: the third constraint condition, the fourth constraint condition, the first constraint condition, the second constraint condition, the eighth constraint condition, the fifth constraint condition, the sixth constraint condition, and the seventh constraint condition.

Optionally, the determining module includes:

a first determining sub-module, configured to determine a candidate value of the waveform parameter according to the waveform related configuration information and the priority information indicating that the priority of the communication performance constraint condition is higher than the priority of the radar performance constraint condition, where the candidate value meets the communication performance constraint condition; and

a second determining sub-module, configured to determine the candidate value as the target value of the waveform parameter in a case that the candidate value completely or maximally meets the radar performance constraint condition; or,

update the candidate value by the first communication device in a case that the radar performance constraint condition includes the fifth constraint condition and the sixth constraint condition and the candidate value does not meet the fifth constraint condition or the sixth constraint condition, until the candidate value meets the fifth constraint condition and the sixth constraint condition, and determine the candidate value meeting the fifth constraint condition and the sixth constraint condition as the target value of the waveform parameter.

Optionally, in a case that the radar performance is higher than the communication performance, the communication performance constraint condition includes at least one of the following conditions:

a first constraint condition; and
a fourth constraint condition; and
the radar performance constraint condition includes at least one of the following conditions:

a second constraint condition;
a third constraint condition;
a seventh constraint condition; and
an eighth constraint condition,
where the first constraint condition is $T_g \geq \tau_{max}$, where $T_g$ represents an OFDM symbol guard interval, and $\tau_{max}$ represents a maximum multipath time delay;
the second constraint condition is $\Delta f \geq f\,max$, where $\Delta f$ represents a subcarrier spacing, and $f_{max}$ represents a maximum Doppler shift;
the third constraint condition is $N_c \Delta f \leq B^0$, where $N_c$ represents a number of subcarriers, and $B^0$ represents a configured maximum bandwidth;

$$N_s f_r \left( T_g + \frac{1}{\Delta f} \right) \leq D^0$$

the fourth constraint condition is , where $N_s$ represents a number of OFDM symbols within a pulse, $f_r$ represents a pulse repetition frequency, and $D^0$ represents a configured maximum duty cycle;

$$\frac{c}{2 N_c \Delta f} \leq \Delta R^0$$

the seventh constraint condition is , where $\Delta R^0$ represents a configured minimum distinguishable range unit; and

$$\frac{c N_s}{2} \left( T_g + \frac{1}{\Delta f} \right) \leq R_{bz}{}^0$$

the eighth constraint condition is , where $R_{bz}{}^0$ represents a configured blind range.

Optionally, the priority information indicates that the priorities of the constraint conditions are sequentially sorted from high to low as follows: the eighth constraint condition, the second constraint condition, the seventh constraint condition, the third constraint condition, the fourth constraint condition, and the first constraint condition.

Optionally, the determining module includes:

a third determining sub-module, configured to determine a candidate value of the waveform parameter according to the waveform related configuration information and the priority information indicating that the priority of the radar performance constraint condition is higher than the priority of the communication performance constraint condition, where the candidate value meets the communication performance constraint condition and the radar performance constraint condition;

a judging sub-module, configured to judge whether the candidate value meets a fifth constraint condition and a sixth constraint condition; and

a fourth determining sub-module, configured to use the candidate value as the target value in a case that the candidate value meets the fifth constraint condition and the sixth constraint condition; or,

update the candidate value in a case that the candidate value does not meet the fifth constraint condition or the sixth constraint condition, until the candidate value meets the fifth constraint condition and the sixth constraint condition, and determine the candidate value meeting the fifth constraint condition and the sixth constraint condition as the target value of the waveform parameter,

where the fifth constraint condition is $\dfrac{c}{2f_r} \geq R_u^0$, where c represents a light velocity, and $R_u^0$ represents a configured maximum unambiguous range; and

the sixth constraint condition is $\dfrac{cf_r}{2f_c} \geq V_u^0$, where $f_c$ represents a carrier frequency, and $V_u^0$ represents a configured maximum unambiguous velocity.

Optionally, the determining module includes:

an adjusting unit, configured to adjust a subcarrier spacing setting parameter at least once to obtain at least two subcarrier spacings in total with the candidate value;
a first determining unit, configured to determine at least two pulse repetition frequencies corresponding to the at least two subcarrier spacings;
a second determining unit, configured to determine a maximum unambiguous range and a maximum unambiguous velocity of a staggered pulse repetition frequency according to the at least two pulse repetition frequencies; and
a processing unit, configured to update the candidate value based on the at least two subcarrier spacings in response to that the maximum unambiguous range of the staggered pulse repetition frequency is greater than or equal to $R_u^0$

and the maximum unambiguous velocity of the staggered pulse repetition frequency is greater than or equal to $V_u^0$

; or,
readjust the subcarrier spacing setting parameter in response to that the maximum unambiguous range of the staggered pulse repetition frequency is less than $R_u^0$ or the maximum unambiguous velocity of the staggered pulse repetition frequency is less than $V_u^0$, until the maximum unambiguous range of the staggered pulse repetition frequency is greater than or equal to $R_u^0$ and the maximum unambiguous velocity of the staggered pulse repetition frequency is greater than or equal to $V_u^0$.

Optionally, the obtaining module is further configured to:

receive waveform related configuration information from the second communication device;
or,
receive performance requirement information from the second communication device, and obtain the waveform related configuration information according to the performance requirement information and an association relationship, the association relationship being an association relationship between the performance requirement information and the waveform related configuration information.

Optionally, the waveform related configuration information includes at least one of the following information:

a maximum bandwidth;
a maximum duty cycle;
a maximum multipath time delay;
a maximum radial velocity of a communication receiver;
a maximum unambiguous range;
a maximum unambiguous velocity;
a maximum radial velocity of a radar detection object;
a minimum distinguishable range unit;
a minimum distinguishable velocity unit; and
a blind range.

Optionally, the waveform parameter includes at least one of the following parameters:

an OFDM symbol guard interval, a subcarrier spacing, a number of subcarriers, a number of OFDM symbols within a pulse, and a pulse repetition frequency.

The apparatus performs transmission of a signal whose waveform parameter is the target value, and/or sends the target value to a target communication device to guide the target communication device to perform transmission of a signal whose waveform parameter is the target value. The target value is determined based on the obtained priority information (for indicating the priority of a communication performance constraint condition of a signal and/or the priority of a radar performance constraint condition of the signal) and waveform related configuration information (for determining a value of a waveform parameter), so that a waveform that performs transmission of the signal can achieve the JCR, and the working requirement of the signal can be met, that is, whether the communication performance is dominated or the radar performance is dominated can be determined.

The signal transmission apparatus in this embodiment of this application may be an apparatus, an apparatus or an electronic device with an operating system, or a component, an integrated circuit or a chip in a terminal. The apparatus or the electronic device may be a mobile terminal or a non-mobile terminal. Exemplarily, mobile terminals include but are not limited to the types of the terminal 11 listed above, and the non-mobile terminal may be a server, a network attached storage (Network Attached Storage, NAS), a personal computer (personal computer, PC), a television (television, TV), a teller machine, or a self-service machine, which is not specifically limited in this embodiment of this application.

The signal transmission apparatus provided in this embodiment of this application can implement the processes implemented by the first communication device in the method embodiment in FIG. 2. To avoid repetition, details are not described here.

Optionally, as shown in FIG. 4, an embodiment of this application further provides a communication device, including a processor 401, a memory 402, and a program or instruction stored in the memory 402 and executable on the processor 401. The program or the instruction, when executed by the processor 401, implements the processes of the above signal transmission method embodiment and can achieve the same technical effects. To avoid repetition, details are not described here.

An embodiment of this application further provides a communication device, including a processor and a communication interface. The processor is configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;

> the processor is further configured to determine a target value of the waveform parameter according to the priority information and the waveform related configuration information; and
> the communication interface is configured to execute at least one of the following operations according to the target value:
> performing transmission of a signal whose waveform parameter is the target value, and
> sending the target value.

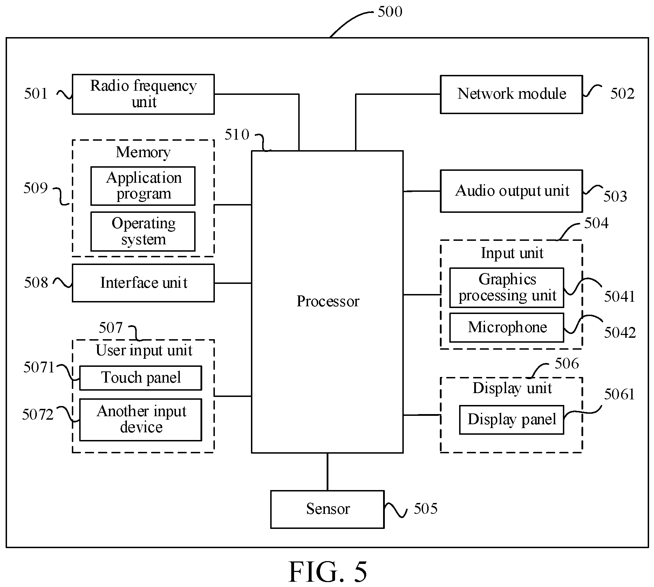

The embodiment of the communication device corresponds to the above execution method embodiment of the first communication device, and various implementation processes and implementation manners of the above method embodiment can be applicable to this terminal embodiment and can achieve the same technical effects. Specifically, FIG. 5 is a schematic diagram of a hardware structure of a terminal as a first communication device for implementing each embodiment of this application.

A terminal 500 includes but is not limited to: at least some components such as a radio frequency unit 501, a network module 502, an audio output unit 503, an input unit 504, a sensor 505, a display unit 506, a user input unit 507, an interface unit 508, a memory 509, and a processor 510.

Those skilled in the art can understand that the terminal 500 may further include a power supply (such as a battery) for supplying power to the components. The power supply may be logically connected to the processor 510 by a power management system, thereby implementing functions such as charging, discharging and power consumption management by the power management system. The terminal structure shown in FIG. 5 does not constitute a limitation on the terminal. The terminal may include more or fewer components than those shown in figures, or some components may be combined, or different component layouts may be used. Details are not described here.

It should be understood that in this embodiment of this application, the input unit 504 may include a graphics processing unit (Graphics Processing Unit, GPU) 5041 and a microphone 5042. The GPU 5041 processes the image data of a static picture or a video obtained by an image acquisition apparatus (for example, a camera) in a video acquisition mode or an image acquisition mode. The display unit 506 may include a display panel 5061, and the display panel 5061 may be configured in the form of a liquid crystal display (LCD), an organic light-emitting diode (OLED), or the like. The user input unit 507 includes a touch panel 5071 and another input device 5072. The touch panel 5071 is also known as a touch screen. The touch panel 5071 may include two parts: a touch detection apparatus and a touch controller. The another input device 5072 may include, but is not limited to, a physical keyboard, a functional key (such as a volume control key or a switch key), a track ball, a mouse and a joystick, which are not described herein in detail.

In this embodiment of this application, after the radio frequency unit 501 receives downlink data from a network side device, the downlink data is sent to the processor 510 for processing. In addition, uplink data is sent to the network side device. Generally, the radio frequency unit 501 includes, but is not limited to, an antenna, at least one amplifier, a transceiver, a coupler, a low noise amplifier, a duplexer, and the like.

The memory 509 may be configured to store a software program or an instruction and various data. The memory 509 may mainly include a program or instruction storage area and a data storage area, where the program or instruction storage area may store an operating system, an application program or an instruction required by at least one function (for example, a sound playback function and an image playback function), and the like. In addition, the memory 509 may include a high-speed random access memory and may further include a non-volatile memory, where the non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory, such as at least one magnetic disk storage device, a flash memory device, or another non-volatile solid-state storage device.

The processor 510 may include one or more processing units. Optionally, the processor 510 may integrate an application processor and a modem processor, where the application processor mainly processes an operating system, a user interface, an application program or instruction, and the like, and the modem processor mainly processes wireless communication, such as a baseband processor. It can be understood that the above modem processor may not be integrated into the processor 510.

The processor 510 is configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;

the processor 510 is further configured to determine a target value of the waveform parameter according to the priority information and the waveform related configuration information; and
the radio frequency unit 501 is configured to perform transmission of a signal whose waveform parameter is the target value.

The terminal performs transmission of a signal whose waveform parameter is the target value, and/or sends the target value to a target communication device to guide the target communication device to perform transmission of a signal whose waveform parameter is the target value. The target value is determined based on the obtained priority information (for indicating the priority of a communication performance constraint condition of a signal and/or the priority of a radar performance constraint condition of the signal) and waveform related configuration information (for determining a value of a waveform parameter), so that a waveform that performs transmission of the signal can achieve the JCR, and the working requirement of the signal can be met, that is, whether the communication performance is dominated or the radar performance is dominated can be determined.

An embodiment of this application further provides a readable storage medium. The readable storage medium stores a program or instruction. The program or instruction, when executed by a processor, implements the processes of the above signal transmission method embodiment and can achieve the same technical effects. To avoid repetition, details are not described here.

The processor is a processor in the terminal described in the above embodiment. The readable storage medium may include a computer-readable storage medium, such as a read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled with the processor. The processor is configured to execute a program or instruction to implement the processes of the above signal transmission method embodiment and can achieve the same technical effects. To avoid repetition, details are not described here.

It should be understood that the chip mentioned in this embodiment of this application may also be referred to as a system level chip, a system chip, a chip system, an on-chip system chip, or the like.

An embodiment of this application further provides a computer program product. The computer program product is stored in a non-volatile storage medium. The computer program product is executed by at least one processor to implement the processes of the above method embodiment and can achieve the same technical effects. To avoid repetition, details are not described here.

It should be noted that in this specification, the terms "include", "contain" or any other variants thereof are intended to cover non-exclusive inclusions, so that a process, method, article, or apparatus including a series of elements includes not only those elements, but also other elements that are not explicitly listed, or further includes elements inherent to such process, method, article, or apparatus. Without more limitations, the element defined by the sentence "including one ..." does not exclude that there are still other same elements in the process, method, article or apparatus including this element. In addition, it should be noted that the scope of the methods and apparatuses in the implementations of this application is not limited to perform functions in the order shown or discussed, but may also include performing functions in a substantially simultaneous manner or in an opposite order according to the functions involved. For example, the described method may be implemented in an order different from the described order, and various steps may be added, omitted or combined. In addition, features described with reference to some examples may be combined in other examples.

Through the descriptions in the above implementations, those skilled in the art can clearly understand that the methods in the above embodiments may be implemented by means of software and a necessary general hardware platform, and certainly, may also be implemented by hardware. However, in many cases, the former is the better implementation. Based on such an understanding, the technical solutions in this application essentially, or the part contributing to the prior art, may be presented in the form of a computer software product. The computer software product is stored in a storage medium (for example, an ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application are described above with reference to the accompanying drawings. However, this application is not limited to the above specific implementations. The above specific implementations are illustrative instead of limitative. Enlightened by this application, those of ordinary skill in the art can make many forms without departing from the idea of this application and the scope of protection of the claims. All of the forms fall within the protection of this application.

## Claims

1.  A signal transmission method, comprising:

    obtaining, by a first communication device, priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;
    determining, by the first communication device, a target value of the waveform parameter according to the priority information and the waveform related configuration information; and
    executing, by the first communication device, at least one of the following operations according to the target value:

    performing transmission of a signal whose waveform parameter is the target value, and
    sending the target value.

2.  The method according to claim 1, wherein the obtaining, by the first communication device, priority information comprises:

    receiving, by the first communication device, priority information from a second communication device;
    or,
    obtaining, by the first communication device, performance requirement information, and determining the priority information according to the performance requirement information, the performance requirement information reflecting a requirement for communication performance or radar performance of the signal.

3.  The method according to claim 2, wherein the obtaining, by the first communication device, performance requirement information comprises:
    receiving, by the first communication device, performance requirement information from the second communication device.

4.  The method according to claim 2 or 3, wherein the determining, by the first communication device, the priority information according to the performance requirement information comprises:

    determining that the priority of the communication performance constraint condition is higher than the priority of the radar performance constraint condition in a case that the performance requirement information indicates that the performance requirement of the signal is that the communication performance is higher than the radar performance; or,

determining that the priority of the radar performance constraint condition is higher than the priority of the communication performance constraint condition in a case that the performance requirement information indicates that the performance requirement of the signal is that the radar performance is higher than the communication performance.

5. The method according to any one of claims 1 to 4, wherein in a case that the priority information indicates that the priority of the communication performance constraint condition is higher than the priority of the radar performance constraint condition, the communication performance constraint condition comprises at least one of the following conditions:

a first constraint condition;
a second constraint condition;
a third constraint condition; and
a fourth constraint condition; and
the radar performance constraint condition comprises at least one of the following conditions:

a fifth constraint condition;
a sixth constraint condition;
a seventh constraint condition; and
an eighth constraint condition,
wherein the first constraint condition is $T_g \geq \tau_{max}$, wherein $T_g$ represents an OFDM symbol guard interval, and $\tau_{max}$ represents a maximum multipath time delay;
the second constraint condition is $\Delta f \geq f_{max}$, wherein $\Delta f$ represents a subcarrier spacing, and $f_{max}$ represents a maximum Doppler shift;
the third constraint condition is $N_c \Delta f \leq B^0$, wherein $N_c$ represents a number of subcarriers, and $B^0$ represents a configured maximum bandwidth;

the fourth constraint condition is $N_s f_r \left( T_g + \dfrac{1}{\Delta f} \right) \leq D^0$ , wherein $N_s$ represents a number of OFDM symbols within a pulse, $f_r$ represents a pulse repetition frequency, and $D^0$ represents a configured maximum duty cycle;

the fifth constraint condition is $\dfrac{c}{2 f_r} \geq R_u^0$ , wherein c represents a light velocity, and $R_u^0$ represents a configured maximum unambiguous range;

the sixth constraint condition is $\dfrac{c f_r}{2 f_c} \geq V_u^0$ , wherein $f_c$ represents a carrier frequency, and $V_u^0$ represents a configured maximum unambiguous velocity;

the seventh constraint condition is $\dfrac{c}{2 N_c \Delta f} \leq \Delta R^0$ , wherein $\Delta R^0$ represents a configured minimum distinguishable range unit; and

the eighth constraint condition is $\dfrac{c N_s}{2} \left( T_g + \dfrac{1}{\Delta f} \right) \leq R_{bz}^0$ , wherein $R_{bz}^0$ represents a configured blind range.

6. The method according to claim 5, wherein the priority information indicates that the priorities of the constraint conditions are sequentially sorted from high to low as follows: the third constraint condition, the fourth constraint condition, the first constraint condition, the second constraint condition, the eighth constraint condition, the fifth constraint condition, the sixth constraint condition, and the seventh constraint condition.

7. The method according to any one of claims 1 to 6, wherein the determining, by the first communication device, a target value of the waveform parameter according to the priority information and the waveform related configuration information comprises:

determining, by the first communication device, a candidate value of the waveform parameter according to the waveform related configuration information and the priority information indicating that the priority of the communication performance constraint condition is higher than the priority of the radar performance constraint condition, wherein the candidate value meets the communication performance constraint condition;

determining, by the first communication device, the candidate value as the target value of the waveform parameter in a case that the candidate value completely or maximally meets the radar performance constraint condition; or,

updating, by the first communication device, the candidate value in a case that the radar performance constraint condition comprises the fifth constraint condition and the sixth constraint condition and the candidate value does not meet the fifth constraint condition or the sixth constraint condition, until the candidate value meets the fifth constraint condition and the sixth constraint condition, and determining the candidate value meeting the fifth constraint condition and the sixth constraint condition as the target value of the waveform parameter.

8. The method according to any one of claims 1 to 4, wherein in a case that the radar performance is higher than the communication performance, the communication performance constraint condition comprises at least one of the following conditions:

a first constraint condition; and
a fourth constraint condition; and
the radar performance constraint condition comprises at least one of the following conditions:

a second constraint condition;
a third constraint condition;
a seventh constraint condition; and
an eighth constraint condition,

wherein the first constraint condition is $T_g \geq \tau_{max}$, wherein $T_g$ represents an OFDM symbol guard interval, and $\tau_{max}$ represents a maximum multipath time delay;

the second constraint condition is $\Delta f \geq f_{max}$, wherein $\Delta f$ represents a subcarrier spacing, and $f_{max}$ represents a maximum Doppler shift;

the third constraint condition is $N_c \Delta f \leq B^0$, wherein $N_c$ represents a number of subcarriers, and $B^0$ represents a configured maximum bandwidth;

the fourth constraint condition is
$$N_s f_r \left( T_g + \frac{1}{\Delta f} \right) \leq D^0$$
, wherein $N_s$ represents a number of OFDM symbols within a pulse, $f_r$ represents a pulse repetition frequency, and $D^0$ represents a configured maximum duty cycle;

the seventh constraint condition is
$$\frac{c}{2 N_c \Delta f} \leq \Delta R^0$$
, wherein $\Delta R^0$ represents a configured minimum distinguishable range unit; and

the eighth constraint condition is
$$\frac{c N_s}{2} \left( T_g + \frac{1}{\Delta f} \right) \leq R_{bz}^{\,0}$$
, wherein $R_{bz}^{\,0}$ represents a configured blind range.

9. The method according to claim 8, wherein the priority information indicates that the priorities of the constraint conditions are sequentially sorted from high to low as follows: the eighth constraint condition, the second constraint condition, the seventh constraint condition, the third constraint condition, the fourth constraint condition, and the first constraint condition.

10. The method according to claims 1 to 4, 8 or 9, wherein the determining, by the first communication device, a target value of the waveform parameter according to the priority information and the waveform related configuration information comprises:

determining, by the first communication device, a candidate value of the waveform parameter according to the waveform related configuration information and the priority information indicating that the priority of the radar performance constraint condition is higher than the priority of the communication performance constraint condition, wherein the candidate value meets the communication performance constraint condition and the radar performance constraint condition;

judging, by the first communication device, whether the candidate value meets a fifth constraint condition and a sixth constraint condition;

using, by the first communication device, the candidate value as the target value in a case that the candidate value meets the fifth constraint condition and the sixth constraint condition; or,

updating, by the first communication device, the candidate value in a case that the candidate value does not meet the fifth constraint condition or the sixth constraint condition, until the candidate value meets the fifth constraint condition and the sixth constraint condition, and determining the candidate value meeting the fifth constraint condition and the sixth constraint condition as the target value of the waveform parameter,

wherein the fifth constraint condition is $\dfrac{c}{2f_r} \geq R_u^0$ wherein c represents a light velocity, and $R_u^0$ represents a configured maximum unambiguous range; and

the sixth constraint condition is $\dfrac{cf_r}{2f_c} \geq V_u^0$, wherein $f_c$ represents a carrier frequency, and $V_u^0$ represents a configured maximum unambiguous velocity.

11. The method according to claim 7 or 10, wherein the updating, by the first communication device, the candidate value comprises:

adjusting, by the first communication device, a subcarrier spacing setting parameter at least once to obtain at least two subcarrier spacings in total with the candidate value;

determining, by the first communication device, at least two pulse repetition frequencies corresponding to the at least two subcarrier spacings;

determining, by the first communication device, a maximum unambiguous range and a maximum unambiguous velocity of a staggered pulse repetition frequency according to the at least two pulse repetition frequencies;

updating, by the first communication device, the candidate value based on the at least two subcarrier spacings in response to that the maximum unambiguous range of the staggered pulse repetition frequency is greater than or equal to $R_u^0$ and the maximum unambiguous velocity of the staggered pulse repetition frequency is greater than or equal to $V_u^0$; or,

readjusting, by the first communication device, the subcarrier spacing setting parameter in response to that the maximum unambiguous range of the staggered pulse repetition frequency is less than $R_u^0$ or the maximum unambiguous velocity of the staggered pulse repetition frequency is less than $V_u^0$, until the maximum unambiguous range of the staggered pulse repetition frequency is greater than or equal to $R_u^0$ and the maximum unambiguous velocity of the staggered pulse repetition frequency is greater than or equal to $V_u^0$.

12. The method according to any one of claims 1 to 11, wherein the obtaining, by the first communication device, waveform related configuration information comprises:

receiving, by the first communication device, waveform related configuration information from the second communication device;

or,

receiving, by the first communication device, performance requirement information from the second communication device, and obtaining the waveform related configuration information according to the performance requirement information and an association relationship, the association relationship being an association relationship between the performance requirement information and the waveform related configuration information.

13. The method according to any one of claims 1 to 12, wherein the waveform related configuration information comprises at least one of the following information:

a maximum bandwidth;
a maximum duty cycle;
a maximum multipath time delay;
a maximum radial velocity of a communication receiver;
the maximum unambiguous range;
the maximum unambiguous velocity;
a maximum radial velocity of a radar detection object;
a minimum distinguishable range unit;
a minimum distinguishable velocity unit; and
a blind range.

14. The method according to any one of claims 1 to 13, wherein the waveform parameter comprises at least one of the following parameters:
an OFDM symbol guard interval, a subcarrier spacing, a number of subcarriers, a number of OFDM symbols within a pulse, and a pulse repetition frequency.

15. A signal transmission apparatus, comprising:

an obtaining module, configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;
a determining module, configured to determine a target value of the waveform parameter according to the priority information and the waveform related configuration information; and
a transmission module, configured to execute at least one of the following operations according to the target value:

performing transmission of a signal whose waveform parameter is the target value, and
sending the target value.

16. The apparatus according to claim 15, wherein the obtaining module is further configured to:

receive priority information from a second communication device;
or,
obtain performance requirement information, and determine the priority information according to the performance requirement information, the performance requirement information reflecting a requirement for communication performance or radar performance of the signal.

17. The apparatus according to claim 16, wherein the obtaining module is further configured to:
receive performance requirement information from the second communication device.

18. The apparatus according to claim 16 or 17, wherein the obtaining module is further configured to:

determine that the priority of the communication performance constraint condition is higher than the priority of the radar performance constraint condition in a case that the performance requirement information indicates that the performance requirement of the signal is that the communication performance is higher than the radar performance; or,
determine that the priority of the radar performance constraint condition is higher than the priority of the communication performance constraint condition in a case that the performance requirement information indicates that the performance requirement of the signal is that the radar performance is higher than the communication performance.

19. The apparatus according to any one of claims 15 to 18, wherein in a case that the priority information indicates that the priority of the communication performance constraint condition is higher than the priority of the radar performance constraint condition, the communication performance constraint condition comprises at least one of the following conditions:

a first constraint condition;
a second constraint condition;
a third constraint condition; and
a fourth constraint condition; and
the radar performance constraint condition comprises at least one of the following conditions:

a fifth constraint condition;
a sixth constraint condition;
a seventh constraint condition; and
an eighth constraint condition,
wherein the first constraint condition is $T_g \geq \tau_{max}$, wherein $T_g$ represents an OFDM symbol guard interval, and $\tau_{max}$ represents a maximum multipath time delay;
the second constraint condition is $\Delta f \geq f_{max}$, wherein $\Delta f$ represents a subcarrier spacing, and $f_{max}$ represents a maximum Doppler shift;
the third constraint condition is $N_c \Delta f \leq B^0$, wherein $N_c$ represents a number of subcarriers, and $B^0$ represents a configured maximum bandwidth;

the fourth constraint condition is $$N_s f_r \left( T_g + \frac{1}{\Delta f} \right) \leq D^0$$, wherein $N_s$ represents a number of OFDM symbols within a pulse, $f_r$ represents a pulse repetition frequency, and $D^0$ represents a configured maximum duty cycle;

the fifth constraint condition is $$\frac{c}{2f_r} \geq R_u^0$$, wherein c represents a light velocity, and $R_u^0$ represents a configured maximum unambiguous range;

the sixth constraint condition is $$\frac{cf_r}{2f_c} \geq V_u^0$$, wherein $f_c$ represents a carrier frequency, and $V_u^0$ represents a configured maximum unambiguous velocity;

the seventh constraint condition is $$\frac{c}{2N_c \Delta f} \leq \Delta R^0$$, wherein $\Delta R^0$ represents a configured minimum distinguishable range unit; and

the eighth constraint condition is $$\frac{cN_s}{2} \left( T_g + \frac{1}{\Delta f} \right) \leq R_{bz}^0$$, wherein $R_{bz}^0$ represents a configured blind range.

20. The apparatus according to claim 19, wherein the priority information indicates that the priorities of the constraint conditions are sequentially sorted from high to low as follows:

the third constraint condition, the fourth constraint condition, the first constraint condition, the second constraint condition, the eighth constraint condition, the fifth constraint condition, the sixth constraint condition, and the seventh constraint condition.

21. The apparatus according to any one of claims 15 to 20, wherein the determining module comprises:

a first determining sub-module, configured to determine a candidate value of the waveform parameter according to the waveform related configuration information and the priority information indicating that the priority of the communication performance constraint condition is higher than the priority of the radar performance constraint condition, wherein the candidate value meets the communication performance constraint condition; and
a second determining sub-module, configured to determine the candidate value as the target value of the waveform parameter in a case that the candidate value completely or maximally meets the radar performance constraint condition; or,
update the candidate value in a case that the radar performance constraint condition comprises the fifth constraint condition and the sixth constraint condition and the candidate value does not meet the fifth constraint condition or the sixth constraint condition, until the candidate value meets the fifth constraint condition and the sixth constraint condition, and determine the candidate value meeting the fifth constraint condition and the sixth constraint condition as the target value of the waveform parameter.

22. The apparatus according to any one of claims 15 to 18, wherein in a case that the radar performance is higher than the communication performance, the communication performance constraint condition comprises at least one of the following conditions:

a first constraint condition; and
a fourth constraint condition; and
the radar performance constraint condition comprises at least one of the following conditions:

a second constraint condition;
a third constraint condition;
a seventh constraint condition; and
an eighth constraint condition,
wherein the first constraint condition is $T_g \geq \tau_{max}$, wherein $T_g$ represents an OFDM symbol guard interval, and $\tau_{max}$ represents a maximum multipath time delay;
the second constraint condition is $\Delta f \geq f_{max}$, wherein $\Delta f$ represents a subcarrier spacing, and $f_{max}$ represents a maximum Doppler shift;
the third constraint condition is $N_c \Delta f \leq B^0$, wherein $N_c$ represents a number of subcarriers, and $B^0$ represents a configured maximum bandwidth;

the fourth constraint condition is $N_s f_r \left( T_g + \dfrac{1}{\Delta f} \right) \leq D^0$ , wherein $N_s$ represents a number of OFDM symbols within a pulse, $f_r$ represents a pulse repetition frequency, and $D^0$ represents a configured maximum duty cycle;

the seventh constraint condition is $\dfrac{c}{2 N_c \Delta f} \leq \Delta R^0$ , wherein $\Delta R^0$ represents a configured minimum distinguishable range unit; and

the eighth constraint condition is $\dfrac{c N_s}{2} \left( T_g + \dfrac{1}{\Delta f} \right) \leq R_{bz}^{0}$ , wherein $R_{bz}^{0}$ represents a configured blind range.

23. The apparatus according to claim 22, wherein the priority information indicates that the priorities of the constraint conditions are sequentially sorted from high to low as follows:
the eighth constraint condition, the second constraint condition, the seventh constraint condition, the third constraint condition, the fourth constraint condition, and the first constraint condition.

24. The apparatus according to any one of claims 15 to 18, 22 or 23, wherein the determining module comprises:

a third determining sub-module, configured to determine a candidate value of the waveform parameter according to the waveform related configuration information and the priority information indicating that the priority of the radar performance constraint condition is higher than the priority of the communication performance constraint condition, wherein the candidate value meets the communication performance constraint condition and the radar performance constraint condition;
a judging sub-module, configured to judge whether the candidate value meets a fifth constraint condition and a sixth constraint condition; and
a fourth determining sub-module, configured to use the candidate value as the target value in a case that the candidate value meets the fifth constraint condition and the sixth constraint condition; or,
update the candidate value in a case that the candidate value does not meet the fifth constraint condition or the sixth constraint condition, until the candidate value meets the fifth constraint condition and the sixth constraint condition, and determine the candidate value meeting the fifth constraint condition and the sixth constraint condition as the target value of the waveform parameter,

wherein the fifth constraint condition is $\dfrac{c}{2f_r} \geq R_u^0$ , wherein c represents a light velocity, and $R_u^0$ represents a configured maximum unambiguous range; and

the sixth constraint condition is $\dfrac{cf_r}{2f_c} \geq V_u^0$ , wherein $f_c$ represents a carrier frequency, and $V_u^0$ represents a configured maximum unambiguous velocity.

25. The apparatus according to claim 21 or 24, wherein the determining module comprises:

an adjusting unit, configured to adjust a subcarrier spacing setting parameter at least once to obtain at least two subcarrier spacings in total with the candidate value;
a first determining unit, configured to determine at least two pulse repetition frequencies corresponding to the at least two subcarrier spacings;
a second determining unit, configured to determine a maximum unambiguous range and a maximum unambiguous velocity of a staggered pulse repetition frequency according to the at least two pulse repetition frequencies; and
a processing unit, configured to update the candidate value based on the at least two subcarrier spacings in response to that the maximum unambiguous range of the staggered pulse repetition frequency is greater than or equal to $R_u^0$ and the maximum unambiguous velocity of the staggered pulse repetition frequency is greater than or equal to $V_u^0$ ; or,
readjust the subcarrier spacing setting parameter in response to that the maximum unambiguous range of the staggered pulse repetition frequency is less than $R_u^0$ or the maximum unambiguous velocity of the staggered pulse repetition frequency is less than $V_u^0$ , until the maximum unambiguous range of the staggered pulse repetition frequency is greater than or equal to $R_u^0$ and the maximum unambiguous velocity of the staggered pulse repetition frequency is greater than or equal to $V_u^0$ .

26. The apparatus according to any one of claims 15 to 25, wherein the obtaining module is further configured to:

receive waveform related configuration information from the second communication device;
or,
receive performance requirement information from the second communication device, and obtain the waveform related configuration information according to the performance requirement information and an association relationship, the association relationship being an association relationship between the performance requirement information and the waveform related configuration information.

27. The apparatus according to any one of claims 15 to 26, wherein the waveform related configuration information comprises at least one of the following information:

a maximum bandwidth;
a maximum duty cycle;
a maximum multipath time delay;
a maximum radial velocity of a communication receiver;
the maximum unambiguous range;
the maximum unambiguous velocity;
a maximum radial velocity of a radar detection object;
a minimum distinguishable range unit;
a minimum distinguishable velocity unit; and
a blind range.

**28.** The apparatus according to any one of claims 15 to 27, wherein the waveform parameter comprises at least one of the following parameters:
an OFDM symbol guard interval, a subcarrier spacing, a number of subcarriers, a number of OFDM symbols within a pulse, and a pulse repetition frequency.

**29.** A communication device, comprising a processor, a memory, and a program or instruction stored in the memory and executable on the processor, wherein the program or instruction, when executed by the processor, implements the steps of the signal transmission method according to any one of claims 1 to 14.

**30.** A communication device, comprising a processor and a communication interface, wherein the processor is configured to obtain priority information and waveform related configuration information, the priority information being used for indicating the priority of a communication performance constraint condition of a signal and/or the priority of a radar performance constraint condition of the signal, and the waveform related configuration information being configuration information used for determining a value of a waveform parameter;

the processor is further configured to determine a target value of the waveform parameter according to the priority information and the waveform related configuration information; and
the communication interface is configured to execute at least one of the following operations according to the target value:
performing transmission of a signal whose waveform parameter is the target value, and sending the target value.

**31.** A readable storage medium, storing a program or instruction, wherein the program or instruction, when executed by a processor, implements the steps of the signal transmission method according to any one of claims 1 to 14.

**32.** A chip, comprising a processor and a communication interface, wherein the communication interface is coupled with the processor, and the processor is configured to execute a program or instruction to implement the method according to any one of claims 1 to 14.

**33.** A computer program product, wherein the program product is stored in a non-volatile storage medium, and the program product is executed by at least one processor to implement the method according to any one of claims 1 to 14.

**34.** A communication device, configured to execute the method according to any one of claims 1 to 14.

FIG. 1

FIG. 2

Signal transmission apparatus — 300

Obtaining module — 301

Determining module — 302

Transmission module — 302

FIG. 3

— 400

Communication device

401 — Processor ⟷ Memory — 402

FIG. 4

500

| | | |
|---|---|---|

501 — Radio frequency unit

510 —

Network module — 502

Memory
509 —
Application program
Operating system

Audio output unit — 503

504
Input unit
Graphics processing unit — 5041
Microphone — 5042

508 — Interface unit

Processor

507 —
User input unit
5071 — Touch panel
5072 — Another input device

506
Display unit — 5061
Display panel

Sensor — 505

FIG. 5

35

## INTERNATIONAL SEARCH REPORT

International application No.

**PCT/CN2022/120533**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W; H04Q; H04L; H04B

Documentation searched other than minimum documentation to the extent that such documents are included in the fields searched

Electronic data base consulted during the international search (name of data base and, where practicable, search terms used)

CNABS; DWPI; 3GPP; ENTXTC; VEN; WPABS; WPABSC; ENTXT; CNTXT; CJFD: 雷达, 通信, 一体, 集成, 优先级, 波形, 约束, 条件, radar, communication, integrated, priority, waveform?, constrain+, condition

### C. DOCUMENTS CONSIDERED TO BE RELEVANT

| Category* | Citation of document, with indication, where appropriate, of the relevant passages | Relevant to claim No. |
|---|---|---|
| X | WO 2021047284 A1 (HUAWEI TECHNOLOGIES CO., LTD.) 18 March 2021 (2021-03-18) description, paragraphs 2-203 | 1-34 |
| A | WO 2012037680 A1 (ÉCOLE POLYTECHNIQUE et al.) 29 March 2012 (2012-03-29) entire document | 1-34 |
| A | US 2020333450 A1 (MASSACHUSETTS INSTUTE OF TECHNOLOGY) 22 October 2020 (2020-10-22) entire document | 1-34 |
| A | CN 111132335 A (NANJING UNIVERSITY OF AERONAUTICS AND ASTRONAUTICS) 08 May 2020 (2020-05-08) entire document | 1-34 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **14 December 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/120533**

| Patent document cited in search report | | | Publication date (day/month/year) | Patent family member(s) | | | Publication date (day/month/year) |
|---|---|---|---|---|---|---|---|
| WO | 2021047284 | A1 | 18 March 2021 | CN | 114303073 | A | 08 April 2022 |
| | | | | US | 2022030626 | A1 | 27 January 2022 |
| | | | | EP | 4022350 | A1 | 06 July 2022 |
| | | | | US | 2021076417 | A1 | 11 March 2021 |
| WO | 2012037680 | A1 | 29 March 2012 | | None | | |
| US | 2020333450 | A1 | 22 October 2020 | WO | 2021011043 | A2 | 21 January 2021 |
| | | | | WO | 2021011043 | A3 | 25 February 2021 |
| | | | | US | 11181630 | B2 | 23 November 2021 |
| CN | 111132335 | A | 08 May 2020 | CN | 111132335 | B | 05 April 2022 |

Form PCT/ISA/210 (patent family annex) (January 2015)

**REFERENCES CITED IN THE DESCRIPTION**

**Patent documents cited in the description**

- CN 202111144149